(19) Europäisches Patentamt
European Patent Office
Office européen des brevets

(11) EP 1 531 193 B1

(12) EUROPÄISCHE PATENTSCHRIFT

(45) Veröffentlichungstag und Bekanntmachung des Hinweises auf die Patenterteilung:
**08.08.2012 Patentblatt 2012/32**

(51) Int Cl.:
***C23F 11/14*** *(2006.01)* ***C23F 11/08*** *(2006.01)*
***C02F 1/20*** *(2006.01)*

(21) Anmeldenummer: **04022768.8**

(22) Anmeldetag: **24.09.2004**

(54) **Verfahren zur Entfernung von Sauerstoff aus Wasser**

Method for deoyxgenating water

Procédé pour la désoxygénation d'eau

(84) Benannte Vertragsstaaten:
**AT BE BG CH CY CZ DE DK EE ES FI FR GB GR HU IE IT LI LU MC NL PL PT RO SE SI SK TR**

(30) Priorität: **30.09.2003 DE 10345820**

(43) Veröffentlichungstag der Anmeldung:
**18.05.2005 Patentblatt 2005/20**

(73) Patentinhaber: **BK Giulini GmbH**
**67065 Ludwigshafen (DE)**

(72) Erfinder:
- **Schweinsberg, Matthias, Dr.**
  **40764 Langenfeld (DE)**
- **Gentschev, Pavel, Dr.**
  **40479 Düsseldorf (DE)**
- **Arnold, Andreas**
  **40729 Hilden (DE)**
- **Hater, Wolfgang, Dr.**
  **41564 Kaarst (DE)**

(56) Entgegenhaltungen:
**EP-A- 0 875 604** **US-A- 3 257 160**
**US-A- 4 012 195** **US-A- 4 067 690**
**US-B1- 6 228 284**

- **MOON J-S ET AL: "Reductive removal of dissolved oxygen in water by hydrazine over cobalt oxide catalyst supported on activated carbon fiber" APPLIED CATALYSIS A: GENERAL, ELSEVIER SCIENCE, AMSTERDAM, NL, Bd. 201, Nr. 1, 26. Juni 2000 (2000-06-26), Seiten 81-89, XP004272391 ISSN: 0926-860X**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 531 193 B1

## Beschreibung

Die vorliegende Erfindung betrifft ein Verfahren zur Entfernung von Sauerstoff in wasserhaltigen Systemen, insbesondere in industriellen Anlagen und Systemen, wie Kessel(speise)wassersystemen, Kreislaufwassersystemen und dergleichen.

In industriellen Kesselwassersystemen muß der Korrosionsschutz durch die komplette Entfernung von Sauerstoff aus dem Betriebswasser erfolgen. Dazu sind chemische Sauerstoffbindemittel erforderlich. Chemische Sauerstoffbindemlttel - synonym auch als "Sauerstoffbinder°, "Sauerstofffänger" oder "$O_2$-Scavanger" bezeichnet - wirken Im Allgemeinen in der Weise, dass sie den Sauerstoff in dem Betriebswasser abbauen, insbesondere reduktiv. Hierbei wird der Sauerstoff vorzugsweise letztendlich zu Wasser reduziert.

Das derzeit als Sauerstoffbindemittel kommerziell gebräuchliche Reagenz ist Diethylhydroxylamin (DEHA), wobei die Gesamtreaktion zwischen DEHA und $O_2$ wie folgt zusammengefasst werden kann:

$$4\ (C_2H_5)_2NOH + 9\ O_2 \rightarrow 8\ CH_3COOH + N_2 + 6\ H_2O.$$

Aktuelle Formulierungen auf der Basis von Diethylhydroxylamin (DEHA) wirken bei Temperaturen unterhalb von 80 °C, wie sie z. B. im Vorratsbehälter von Kessel(speise)wasseranlagen herrschen, zu langsam und müssen daher durch Additive beschleunigt werden.

Klassische Additive fungieren als sogenannte "Co-Scavenger", d. h. sie werden selbst verbraucht und wirken auch bei niedriger Temperatur, oft in Synergie mit z. B. DEHA. Das gebräuchlichste Additiv ist Hydrochinon (HQ). Diese Substanz ist aber giftig, mutagen und kanzerogen und daher zukünftig als Co-Scavanger nicht mehr wünschenswert.

Daneben wurde im Stand der Technik auch vorgeschlagen, den Sauerstoffabbau durch das Sauerstoffbindemittel, insbesondere DEHA, katalytisch mit Übergangsmetallionen zu beschleunigen, insbesondere Kobalt- und Kupferlonen (vgl. US-A-5 256 311, EP 0 505 633 B1 und US-A-4 067 690). In der Praxis haben sich diese Systeme aber nicht bewährt, weil sie den entscheidenden Nachteil aufweisen, daß in Wasser gelöste Übergangsmetallionen, wie z. B. Kupferionen, die ein größeres Redoxpotential als Eisenionen gemäß der elektrochemischen Spannungsreihe besitzen, d. h. Ionen von Metallen, die sozusagen edler als Eisen sind, zwar den Saucrstöffabbau beschleunigen bzw, katalysieren, aber in der Praxis zu einer massiven Korrosion bzw. zu einem Lochfraß des Kessels führen und somit in bezug auf die beabsichtigte Wirkung nicht nur abträglich sind, sondern die Schäden am Kesselsystem noch verschlimmern.

Es ist daher die Aufgabe der vorliegenden Erfindung ein Verfahren zur Entfernung von Sauerstoff in Wasser enthaltenden Systemen, insbesondere in industriellen Anlagen bzw. Systemen, wie Kessel(speise)wassersystemen, Kreislaufwassersystemen und dergleichen, bereitzustellen, welches die vorgenannten Nachteile zumindest teilweise vermeidet.

Gegenstand der vorliegenden Erfindung ist somit ein Verfahren wie im Anspruch 1 definiert zur Entfernung von Sauerstoff in Wasser enthaltenden Systemen, insbesondere in industriellen Anlagen bzw. Systemen, wie Kessel (speise)wassersystemen, Kreislaufwassersystemen und dergleichen.

Das Sauerstoffbindemittel wird erfindungsgemäß im allgemeinen derart ausgewählt, daß es den Sauerstoff abbaut, insbesondere letztendlich zu Wasser reduziert. Vorzugsweise wirkt das Sauerstoffbindemittel reduzierend.

Erfindungsgemäß werden als Sauerstoffbindemittel N,N-Diethylhydroxylamin (DEHA) oder N-Isopropylhydroxylamin (NIPHA),eingesetzt..

Erfindungsgemäß beträgt die Konzentration an Sauerstoffbindemittel, gewichtsbezogen auf das zu behandelnde Wasser, 1 bis 1.000 ppm, insbesondere 10 bis 120 ppm, vorzugsweise etwa 50 ppm. Die Konzentration an Sauerstoffbindemittel, vorzugsweise DEHA, berechnet als Gewichtsverhältnis von einzusetzendem Sauerstoffbindemittel zu zu entfernendem Sauerstoff, beträgt dabei mindestens 4, insbesondere mindestens 6, vorzugsweise mindestens 8 oder mehr.

Das Übergangsmetall des erfindungsgemäß eingesetzten Katalysators bzw. Übergangsmetallkomplexes kann jedes beliebige Übergangsmetallion sein, welches den Sauerstoffabbau katalysiert bzw. mit molekularem Sauerstoff reagiert. Insbesondere ist das Übergangsmetall ausgewählt aus der Gruppe von Titan, Vanadium, Molybdän, Mangan, Eisen, Kobalt, Nickel, Kupfer, Ruthenium, Rhodium, Palladium, Silber, Osmium, Iridium, Platin und Gold. Erfindungsgemäß bevorzugt sind die sogenannten Platinmetalle. Erfindungsgemäß besonders bevorzugt sind Kupfer, Eisen und Mangan. Ganz besonders bevorzugt ist Kupfer, insbesondere Kupfer in der Oxidationsstufe +2.

Gemäß der vorliegenden Erfindung wird als Katalysator insbesondere ein Chelatkomplex eingesetzt.

Die erfindungsgemäß eingesetzten Übergangsmetallkomplexe sind die folgenden Verbindungen der allgemeinen Formeln (I) bis (IV)

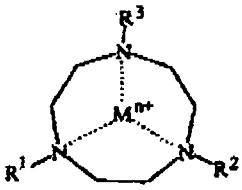

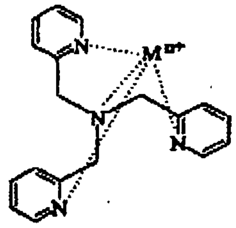

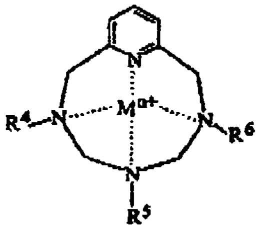

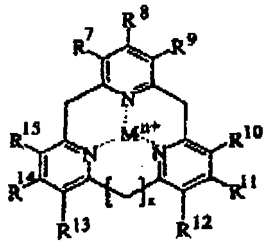

(I) (II) (III) (IV)

wobei

- M ein Übergangsmetall, ist

- n die Oxidationsstufe und/oder die Ladung des Übergangsmetalls darstellt und insbesondere ganze Werte von 0 bis 8, insbesondere von 0 bis 6, einnimmt, insbesondere wobei n im Fall, dass M Kupfer darstellt, vorzugsweise 2 beträgt;

- $R^1$ bis $R^{15}$, unabhängig voneinander, jeweils Wasserstoff oder einen Alkyl-, Aryl-, Alkylaryl- oder Arylalkylrest, insbesondere Wasserstoff oder einen geradkettigen oder verzweigten $C_1$- bis $C_{10}$-Alkylrest, darstellen und vorzugsweise sämtlich Wasserstoff sind;

- x ganze Werte von 1 bis 3 annimmt und vorzugsweise 1 ist, wobei die Sauerstoffbindemittel aus N,N-Diethylhydroxylamin (DEHA) oder N-Isopropylhydroxylamin (NIPHA) ausgewählt sind.

Die Übergangsmetalle sind ausgewählt aus der Gruppe von Titan, Vanadium, Molybdän, Mangan, Eisen, Kobalt, Nickel, Kupfer, Ruthenium, Rhodium, Palladium, Silber, Osmium, Iridium, Platin und Gold, insbesondere Kupfer, Eisen und Mangan, besonders bevorzugt Kupfer, ganz besonders bevorzugt Kupfer in der Oxidationsstufe +2.

Erfindungsgemäß bevorzugt ist der Übergangsmetallkomplex aus den folgenden Verbindungen ausgewählt:

- Verbindung der allgemeinen Formel (I) mit M = Mn oder Cu, vorzugsweise Cu, und $R^1 = R^2 = R^3 = H$ und n = 2;

- Verbindung der allgemeinen Formel (II) mit M = Mn oder Cu, vorzugsweise Cu, und n = 2;

- Verbindung der allgemeinen Formel (III) mit M = Cu und $R^4 = R^5 = R^6 = H$ und n = 2;

- Verbindung der allgemeinen Formel (IV) mit M = Cu und $R^7$ bis $R^{15}$ = H und n = 2 undx=1.

Erfindungsgemäß ganz besonders bevorzugt ist der zuvor beschriebene Übergangsmetallkomplex der allgemeinen Formel (III) mit M = Cu und $R^4 = R^5 = R^6 = H$ und n = 2.

Weitere, erfindungsgemäß als Katalysatoren einsetzbare Verbindungen sind beispielsweise in der deutschen Offenlegungsschrift DE 101 63 331 A1 der Henkel KGaA offenbart. Die dort als trägerfixierte Bleichkatalysatoren zur Katalyse von Peroxidverbindungen beschriebenen Übergangsmetallkomplexe eignen sich grundsätzlich zur Verwendung als Katalysatoren in dem erfindungsgemäßen Verfahren.

Gemäß der vorliegenden Erfindung liegt das Übergangsmetall des erfindungsgemäß als Katalysator eingesetzten Übergangsmetallkomplexes vorzugsweise in der Oxidationsstufe +2, +3 oder +4 vor. Insbesondere im Fall von Kupfer wird die Oxidationsstufe +2 bevorzugt.

Erfindungsgemäß als Katalysatoren bevorzugt werden Übergangsmetallkomplexe auf Basis von Cu(II)-Komplexen. Dabei kann das Cu(II)-Ion insbesondere mehrfach koordiniert sein, vorzugsweise vierfach, fünffach oder sechsfach, ganz besonders bevorzugt vierfach. Beispiele sind Übergangsmetallkomplexe auf Basis planarer Cu(II)-Komplexe mit einem vierfach koordinierten Cu(II)-Ion bzw. Cu(II)-Metall als Übergangsmetall.

Vorteilhafterweise ist der erfindungsgemäß als Katalysator eingesetzte Übergangsmetallkomplex unter den Verfahrensbedingungen bzw. in dem zu behandelnden Wasser derart stabil, daß sich zumindest im wesentlichen kein Übergangsmetall des Übergangsmetallkomplexes an den Wandungen des Systems abscheiden und zu Lochfraß führen kann. Zu diesem Zweck ist der Übergangsmetallkomplex unter den Verfahrensbedingungen bzw. in dem zu behandelnden Wasser zumindest im wesentlichen stabil, insbesondere zumindest im wesentlichen nicht dissoziiert, so dass er im wesentlichen keine freien Übergangsmetallionen in das zu behandelnde Wasser freisetzt. Dabei ist der Übergangsmetallkomplex unter den Verfahrensbedingungen bzw. in dem zu behandelnden Wasser unter den jeweiligen Anwendungsbedingungen im allgemeinen derart stabil, dass die Konzentration an freien bzw. gelösten Übergangsmetallionen, gewichtsbezogen auf das zu behandelnde Wasser, höchstens 0,1 ppm, insbesondere höchstens 0,01 ppm, vorzugsweise höchstens 0,001 ppm, ganz besonders bevorzugt höchstens 0,0001 ppm, beträgt.

Für den Fall, dass der Übergangsmetallkomplex der allgemeinen Formel ML mit M=Metall und L=Ligand entspricht, beträgt die Komplexbildungskonstante $K_L'$ gemäß der Gleichung

$$K_L' = \frac{[ML]}{[M][L]}$$

wobei die eckigen Klammerausdrücke die jeweiligen Konzentrationen in mol/l bezeichnen,
bezogen auf die Komplexbildungsreaktion (1')

$$M + L \rightleftarrows M\,L \qquad (1')$$

bei 298,15 K insbesondere mindestens $5 \cdot 10^2$ l/mol, vorzugsweise mindestens $5 \cdot 10^5$ l/mol, ganz besonders bevorzugt mindestens $5 \cdot 10^8$ l/mol.

Gemäß einer Ausführungsform kann der Katalysator bzw. der Übergangsmetallkomplex in dem zu behandelnden Wasser gelöst sein.

Gemäß einer alternativen Ausführungsform kann der Katalysator bzw. der Übergangsmetallkomplex als ein Trägerkatalysator eingesetzt werden, d. h. der Katalysator bzw. der Übergangsmetallkomplex an eine geeignete Trägeroberfläche angebunden oder angeknüpft sein. Erfindungsgemäß eignen sich hierzu alle für diese Zwecke verwendbaren polymeren organischen oder aber anorganischen Trägersysteme. Die Anbindung des Katalysators bzw. des Übergangsmetallkomplexes an die Trägeroberfläche kann beispielsweise über chemische, insbesondere kovalente und/oder ionische Bindungen erfolgen, insbesondere über Bindung(en) des oder der stickstoffhaltigen Liganden.

Die Art der Anknüpfung an die Trägeroberfläche kann ansonsten beliebiger Natur sein, sofern dies mit dem erfindungsgemäßen Verfahren kompatibel ist. Beispielsweise kommen alle kovalenten und/oder ionischen chemischen Bindungen vom Liganden zum Polymer in Betracht, nucleophile bzw. elektrophile Addition, Photografting substituierter Komplexe, Imprägnierung beliebiger Träger z. B. durch beim Abzug des Lösungsmittels nachvernetzendes wasserunlösliches Polymer etc.

Beispielsweise können als Katalysatorträger Polymere in Betracht kommen, die wenigstens einen zur Ausbildung einer vorzugsweise kovalenten und/oder ionischen Bindung geeigneten Substituenten bzw. eine hierzu geeignete funktionelle Gruppe enthalten, insbesondere -H, -OH, $-NH_2$, -NH-R, -Halogen, -SH, -Si-OR,-C=C, -C=C, -OR, -NCO, -COOH, -COOR, -CHO, -CN, -NH-, -C=O, -O=C-O-C=O- od er eine Epoxidfunktion.

Beispielsweise kann der polymere Katalysatorträger ausgewählt sein aus der Gruppe von Polyvinylchloriden, Polybutadienen, Polychlorbutadienen, Polyvinilydenchloriden, Polyacrylnitrilen, Polydichlormethyloxaisobutanen, Poly(meth)acrylaten, Polyurethanen, Polystyrolen, Polyvinylalkoholen, Polyethyleniminen, Cellulosen, Chitosanen, Polysiloxanen, Polyamiden, Polyaminen, Polyformaldehyden, Polyalkylenen wie Polyethylen und Polypropylen, Polytetrafluoräthylen, Polyisobutylen, Polydlmethylphenylenoxid, chlormethylierten Polystyrolen und/oder Polyisocyanaten.

Der Träger für den Katalysator bzw. Übergangsmetallkomplex kann beispielsweise ein Formkörper sein, vorzugsweise ein Pulver, ein Partikel, ein Agglomerat und/oder eine Faser.

Die Konzentration an eingesetztem Katalysator bzw. Übergangsmetallkomplex ist nicht kritisch und kann in weiten Grenzen variieren. Im allgemeinen beträgt sie, gewichtsbezogen auf das zu behandelnde Wasser, 0,005 bis 100 ppm, insbesondere 0,005 bis 10 ppm, vorzugsweise 0,005 bis 5 ppm, besonders bevorzugt 0,05 bis 2,5 ppm, ganz besonders bevorzugt 0,2 bis 1,0 ppm.

Im Fall von im zu behandelnden Wasser gelösten Katalysatoren beträgt die Katalysatorkonzentration, gewichtsbezogen auf das zu behandelnde Wasser, insbesondere 0,005 bis 5 ppm, vorzugsweise 0,2 bis 1,0 ppm.

Im Falle von Trägerkatalysatoren beträgt die effektive Katalysatorkonzentration, gewichtsbezogen auf das zu behandelnde Wasser, im allgemeinen 0,05 bis 10 ppm, insbesondere 0,05 bis 5 ppm. Effektive Katalysatorkonzentration meint insbesondere die nach Messungen der Anmelderin extrapollerte Menge an gelöstem Katalysator, welcher die gleiche Leistung wie das fixierte System bzw. der Trägerkatalysator liefert; es handelt sich also um eine Kennzahl für das fixierte System. Die tatsächliche bzw. absolute Menge an auf dem Träger aufgebrachtem Katalysator kann davon stark verschieden sein, im allgemeinen mehr Katalysator insgesamt auf dem Träger; im allgemeinen liegt letztere mindestens um den Faktor 5 bis 10 höher, also z. B. im Bereich von 0,25 bis 100 ppm oder sogar mehr (z. B. bis zu 500 ppm), insbesondere im Bereich von 0,25 bis 50 ppm.

Das erfindungsgemäße Verfahren kann in einem weiten Temperaturbereich durchgeführt werden. Im Allgemeinen kommen Temperaturen von 10 bis 350 °C, insbesondere 10 bis 300 °C, vorzugsweise 30 bis 90 °C, in Betracht. Entscheidend ist dabei, dass der als Katalysator eingesetzte Übergangsmetallkomplex unter diesen Bedingungen stabil ist, insbesondere nicht in seine Bestandtelle dissoziiert. Ein besonderer Vorteil des erfindungsgemäßen Verfahrens muß insbesondere darin gesehen werden, dass die Sauerstoffentfernung auch in relativ niedrigen Temperaturbereichen, z. B. im Bereich von 30 bis 90 °C, effizient erfolgt, wie sie insbesondere in Kessel(speise)wasersystemen und Kreislaufwassersystemen vorkommen.

Das erfindungsgemäße Verfahren läßt sich in einem weiten Druckbereich durchführen. Insbesondere wird es bei Drücken von 1 bis 150 bar, vorzugsweise 1 bis 80 bar, durchgeführt.

Das erfindungsgemäße Verfahren lässt sich in beliebigen, Wasser enthaltenen Systemen durchführen, bei denen Sauerstoff entfernt werden soll, insbesondere in industriellen Anlagen und Systemen, wie z. B. Kessel(speise) wassersystemen, Kreislaufwassersystemen und dergleichen, wie sie beispielsweise in Kraftwerken oder industriellen bzw. chemischen Produktionsanlagen vorkommen.

Das erfindungsgemäße Verfahren ermöglicht eine effiziente Verhinderung der Korrosion in diesen Systemen. Da einerseits die Sauerstoffentfernung bzw. -Reduktion effizient katalysiert wird, andererseits keine freien Übergangsmetallionen zum Einsatz kommen, kann eine Korrosion der entsprechenden Anlagen effizient verhindert werden.

Durch den Einsatz der Übergangsmetallkomplexkatalysatoren, die entweder als gelöstes Additiv oder als fixierte Behandlungsstufe (z. B. als Fülterbeschichtung oder Filterkartusche) eingesetzt werden können, gelingt der effiziente Ersatz von Co-Scavanger, wie Hydrochinon oder anderer Katalysatorsysteme, wie sie im Stand der Technik zum Einsatz kommen.

Bei Verwendung löslicher Katalysatoren kann der Einsatz des Additivs (= Katalysator bzw. Übergangsmetallkomplex) um 95 % bei gleichzeitig gesteigerter Leistung, d. h. schnellerem $O_2$-Abbau, gesenkt werden, verglichen mit Hydrochinon als Additiv bzw. Co-Scavanger.

Da das Additiv bzw. der Katalysator bei der Reaktion nicht verbraucht wird, ist das Verfahren besonders ökonomisch.

Die Katalysatoren können durch Fixierung an Oberflächen zur kompletten Eliminierung bzw. Substitution löslicher Verstärkeradditive (wie z. B. Hydrochinon) im Zusammenwirken mit Reduktionsmitteln bzw. Sauerstoffbindemitteln benutzt werden. Dies bedeutet weniger Chemikalienbelastung bei gleichzeitig besserer Handhabung und identischer, wenn nicht sogar gesteigerter Leistung (Ersatz der löslichen Chemikalie bzw. des löslichen Co-Scavanger, wie z. B. Hydrochinon, durch fixierten Katalysator). In der fixierten Darreichungsform können die Katalysatoren zusätzlich als Filtersystem für unerwünschte, gegebenenfalls vorhandene Stoffe dienen (z. B. abwasserbelastende und/oder korrosionsfördernde löslichen Schwermetalle, wie z. B. Eisen, Kupfer oder Zinn); für die "Filter"-Anwendung sollten die Katalysatoren nicht mit Metall beladen sein, hier werden also nur die Liganden eingesetzt. Der Funktionszyklus beispielsweise eines fixierten Katalysators bis zur notwendigen Auswechslung ist praktisch unbeschränkt. Unter realen Bedingungen sind Einsatzzeiten von mehreren Monaten, vorteilhafterweise zumindest von mehr als zwei Monaten, angestrebt.

Weiterer Gegenstand der vorliegenden Erfindung ist das Kombinationssystem wie gemäß Anspruch 18. Für weitere Einzelheiten zu dem erfindungsgemäßen Kombinationssystem kann auf die obigen Ausführungen zu dem erfindungsgemäßen Verfahren verwiesen werden, die in Bezug auf das erfindungsgemäße Kombinationssystem entsprechend gelten.

Die folgenden Ausführungsbeispiele dienen lediglich der Veranschaulichung der vorliegenden Erfindung, ohne sie jedoch hierauf zu beschränken.

**Ausführungsbeispiele**

**Methodik**

Zwei verschiedene Laborverfahren wurden zur Bestimmung der Effektivität der Substanzen verwendet. Die erste und wichtigste Methode ist die Bestimmung des Sauerstoffgehaltes einer Lösung des Sauerstoffbindemittels in VE-Wasser (vollentsalztem Wasser) als Funktion der Zeit (z. B. über elektrochemische Meßverfahren). Als ergänzende Methode wurden noch Korrosionstests an Fe-Standardcoupons in geschlossenen Gefäßen durchgeführt.

a) Methodik: Sauerstoffbestimmung für gelöste Substanzen/Katalysatoren

Eine definierte Qualität von deionisiertem Wasser (Leitfähigkeit < 1$\mu$S/cm) wurde für alle Sauerstoffbindungsmessungen verwandt. Das Wasser wird in eine luftdicht abgeschlossene, temperierbare Glasapparatur eingebracht und je nach Versuchsführung entweder gerührt oder im Kreislauf umgepumpt.

Die Messung des Sauerstoffgehaltes erfolgt mit einer kommerziell erhältlichen Sauerstoff-Meßelektrode als Funktion der Zeit. Fixierte Katalysatoren werden auf einem geeigneten Träger fest in das System eingebracht, so daß ständig ein konstanter Wasserfluß über dem Katalysatorsystem herrscht.

Die Temperatur des Experiments ist variabel, üblicherweise wird unter 50 °C gemessen. Wasseraustausch ist dabei über ein Zu- und Ablaufsystem ohne Öffnung der Apparatur möglich.

b) Methodik: Korrosionstests

In einem luftdichten Glasgefäß werden Standardcoupons aus Eisen für 5 h in einer niedrigkorrosiven Standard-Wasserqualität unter Zusatz des zu testenden Sauerstoffbindemittels unter konstanter Rührung und 25 °C eingebracht. Nach der Versuchszeit werden die Coupons gespült, getrocknet und gewogen. Aus dem Gewichtsverlust errechnet sich die relative Korrosionsinhibierung.

**Standardsystem / Leistungsstand der Technik (nicht erfindungsgemäß)**

Fig. 1 zeigt die Sauerstoffkonzentration vs. Zeit für das Standardsystem DEHA/HQ gemessen bei 25 °C. Deutlich erkennbar sind die schlechte Leistung von DEHA allein, die bessere Leistung von 10 ppm HQ allein sowie die synergistische Wirkung von DEHA/HQ im Gemisch.

**Erfindungsgemäße Beispiele**

Die folgenden vier Cu(II)-Komplexe wurden als Katalysatorsysteme für die erfindungsgemäßen Versuchsdurchführungen verwendet, und zwar als gelöste wie als Trägerkatalysatoren:

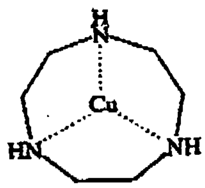

(I')

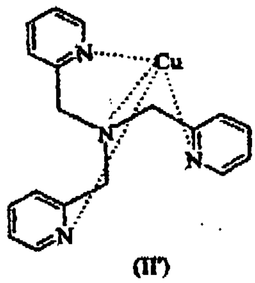

(II')

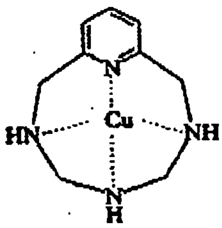

(III')

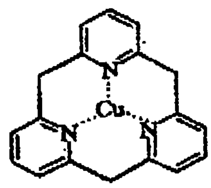

(IV')

**Gelöste Katalysatorsysteme (erfindungsgemäß)**

Fig. 2 zeigt den Vergleich zwischen dem erfindungsgemäßen System (0,5 ppm Cu-Katalysator + 50 ppm DEHA) und dem Stand der Technik (10 ppm Hydrochinon + 50 ppm DEHA). Das erfindungsgemäße System zeigt bei deutlich reduzierter Einsatzkonzentration die gleiche Leistung.

**Fixierte Katalysatorsysteme (erfindungsgemäß)**

Die Leistung eines auf PS-Kugeln (Polystyrol-Kugeln) chemisch fixierten Cu-Katalysators in mehreren Zyklen mit komplettem Wasserwechsel entspricht der Leistung der löslichen Systeme auch nach mehreren Zyklen. Eine Auswaschung von Cu oder Ligand / Komplex findet nicht statt.

Fig. 3 zeigt die Ergebnisse eines 5stündigen Kurzzeit-Korrosionstests im Vergleich der Standardsysteme DEHA und DEHA/Hydrochinon mit dem neuen System DEHA/Cu-Katalysator. Das DEHA/Katalysator-System zeigt den besten Wert, während der Katalysator allein keine Wirkung zeigt.

## Patentansprüche

1. Verfahren zur Entfernung von Sauerstoff in Wasser enthaltenden Systemen, insbesondere in industriellen Anlagen und/oder Systemen, wie Kessel-(speise)wassersystemen, Kreislaufwassersystemen und dergleichen, durch Behandlung des Sauerstoff enthaltenden Wassers mit mindestens einem Sauerstoffbindemittel (Sauerstoffbinder, Sauerstofffänger, $O_2$-Scavanger) in Gegenwart mindestens eines Katalysators,
   **dadurch gekennzeichnet,**
   **dass** als Katalysator ein Übergangsmetallkomplex, welcher unter den Behandlungsbedingungen im wesentlichen stabil ist und der Übergangsmetallkomplex der allgemeinen Formel ML mit M = Übergangsmetall und L = Ligand entspricht und die Komplexbildungskonstante $K_L$' gemäß der Gleichung:

$$K'_L = \frac{[ML]}{[M][L]}$$

bezogen auf die Komplexbildungsreaktion (1')

$$-M + L \rightleftarrows M\,L \qquad (1')$$

- bei 298,15 K mindestens $5 \cdot 10^1$ l/mol, insbesondere mindestens $5 \cdot 10^2$ l/mol, vorzugsweise mindestens $5 \cdot 10^5$ l/mol, ganz besonders bevorzugt mindestens $5 \cdot 10^8$ l/mol, beträgt und dass die Konzentration an Sauerstoffbindemittel, gewichtsbezogen auf das zu behandelnde Wasser, 1 bis 1.000 ppm, insbesondere 10 bis 120 ppm, vorzugsweise etwa 50 ppm, beträgt oder dass die Konzentration an Sauerstoffbindemittel, berechnet als Gewichtsverhältnis von einzusetzendem Sauerstoffbindemittel zu zu entfernendem Sauerstoff, mindestens 4, insbesondere mindestens 6, vorzugsweise mindestens 8 oder mehr, beträgt und dass als Katalysator ein Übergangsmetallkomplex, welcher mindestens einen stickstoffhaltigen Liganden umfasst eingesetzt wird und der Übergangsmetallkomplex ausgewählt ist aus den folgenden Verbindungen der allgemeinen Formeln (I) bis (IV)

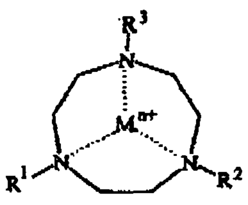
(I)

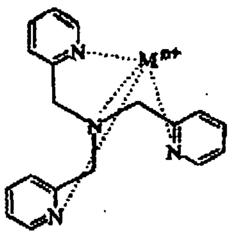
(II)

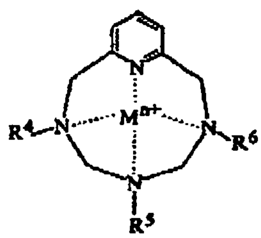
(III)

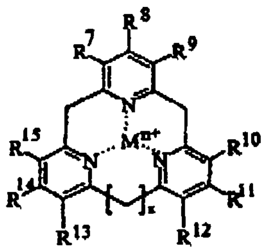
(IV)

wobei

- M ein Übergangsmetall ist,
- n die Oxidationsstufe und/oder die Ladung des Übergangsmetalls darstellt und insbesondere ganze Werte von 0 bis 8, insbesondere von 0 bis 6, einnimmt, insbesondere wobei n im Fall, dass M Kupfer darstellt, vorzugsweise 2 beträgt;
- $R^1$ bis $R^{15}$, unabhängig voneinander, jeweils Wasserstoff oder einen Alkyl-, Aryl-, Alkylaryl- oder Arylalkylrest, insbesondere Wasserstoff oder einen geradkettigen oder verzweigten $C_1$- bis $C_{10}$-Alkylrest, darstellen und vorzugsweise sämtlich Wasserstoff sind;

x ganze Werte von 1 bis 3 annimmt und vorzugsweise 1 ist, wobei die Sauerstoffbindemittel aus N,N-Diethylhydroxylamin (DEHA) oder N-Isopropylhydroxylamin (NIPHA) ausgewählt sind.

2. Verfahren nach Anspruch 1, **dadurch gekennzeichnet, dass** als Sauerstoffbindemittel bevorzugt N,N-Diethylhydroxylamin (DEHA) verwendet wird.

3. Verfahren nach Anspruch 1, **dadurch gekennzeichnet, dass** das Übergangsmetall ausgewählt ist aus der Gruppe von Titan, Vanadium, Molybdän, Mangan, Eisen, Kobalt, Nickel, Kupfer, Ruthenium, Rhodium, Palladium, Silber, Osmium, Iridium, Platin und Gold, insbesondere Kupfer, Eisen und Mangan, besonders bevorzugt Kupfer, ganz besonders bevorzugt Kupfer in der Oxidationsstufe +2.

4. Verfahren nach Anspruch 1, **dadurch gekennzeichnet, dass** der Übergangsmetallkomplex ausgewählt ist aus den folgenden Verbindungen:

- Verbindung der allgemeinen Formel (I) mit M = Mn oder Cu, vorzugsweise Cu, und $R^1 = R^2 = R^3 = H$ und n = 2;

- Verbindung der allgemeinen Formel (II) mit M = Mn oder Cu, vorzugsweise Cu, und n = 2;
- Verbindung der allgemeinen Formel (III) mit M = Cu und $R^4 = R^5 = R^6 = H$ und n = 2;
- Verbindung der allgemeinen Formel (IV) mit M = Cu und $R^7$ bis $R^{15}$ = H und n = 2 und x = 1.

**5.** Verfahren nach Anspruch 1, **dadurch gekennzeichnet, dass** der Übergangsmetallkomplex der allgemeinen Formel (III) mit M = Cu und $R^4 = R^5 = R^6 = H$ und n = 2 entspricht.

**6.** Verfahren nach Anspruch 1, **dadurch gekennzeichnet, dass** das Übergangsmetall in der Oxidationsstufe +2, +3 oder +4 vorliegt, insbesondere im Fall von Kupfer in der Oxidationsstufe +2.

**7.** Verfahren nach Anspruch 1, **dadurch gekennzeichnet, dass** der Übergangsmetallkomplex ein Cu(II)-Komplex ist, insbesondere wobei das Cu(II)-Ion vorzugsweise mehrfach, koordiniert ist, insbesondere vierfach, fünffach oder sechsfach, ganz besonders bevorzugt vierfach koordiniert ist, und/oder dass der Übergangsmetallkomplex ein planarer Cu(II)-Komplex mit einem vierfach koordinierten Cu(II)-Ion als Übergangsmetall ist.

**8.** Verfahren nach Anspruch 1, **dadurch gekennzeichnet, dass** die Konzentration des Übergangsmetallkomplexes unter den Verfahrensbedingungen in dem zu behandelnden Wasser bezogen auf die freien Übergangsmetallionen, und gewichtsbezogen auf das zu behandelnde Wasser, höchstens 0,01 ppm, insbesondere höchstens 0,001 ppm, und ganz besonders bevorzugt höchstens 0,0001 ppm beträgt.

**9.** Verfahren nach Anspruch 4, **dadurch gekennzeichnet, dass** der Übergangsmetallkomplex in dem zu behandelnden Wasser gelöst ist.

**10.** Verfahren nach den Ansprüchen 1 bis 9, **dadurch gekennzeichnet, dass** der Übergangsmetallkomplex als Trägerkatalysator eingesetzt wird, und/oder dass der Übergangsmetallkomplex an eine geeignete Trägeroberfläche, insbesondere an ein polymeres organisches oder ein anorganisches Trägersystem, angeknüpft und/oder angebunden ist, vorzugsweise über chemische, insbesondere kovalente und/oder ionische Bindungen, insbesondere über Bindung(en) des oder der stickstoffhaltigen Liganden zur Trägeroberfläche.

**11.** Verfahren nach Anspruch 10, **dadurch gekennzeichnet, dass** der Katalysatorträger ein Polymer aufweist, das wenigstens einen zur Ausbildung einer kovalenten Bindung geeigneten Substituenten und/oder funktionelle Gruppe enthält, insbesondere -H, -OH, $-NH_2$, -NH-R, -Halogen, -SH, -Si-OR, -C=C, -C≡C. -OR, -NCO, -COOH, -COOR, -CHO, -CN, -NH-, -C=O, -O=C-O-C=O- und/oder Epoxid.

**12.** Verfahren nach Ansprüchen 10 und 11, **dadurch gekennzeichnet, dass** der polymere Katalysatorträger ausgewählt ist aus der Gruppe von Polyvinylchloriden, Polybutadienen, Polychlorbutadienen, Polyvinylidenchloriden, Polyacrylnitrilen, Polydichlormethyloxaisobutanen, Poly(meth)acrylaten, Polyurethanen, Polystyrolen, Polyvinylalkoholen, Polyethyleniminen, Cellulosen, Chitosanen, Polysiloxanen, Polyamiden, Polyaminen, Polyformaldehyden, Polyalkylenen wie Polyethylen und Polypropylen, Polytetrafluorethylen, Polyisobutylen, Polydimethylphenylenoxid, chlormethylierten Polystyrolen und/oder Polyisocyanaten.

**13.** Verfahren nach Ansprüchen 11 bis 12, **dadurch gekennzeichnet, dass** der Träger ein Formkörper, vorzugsweise ein Pulver, ein Partikel, ein Agglomerat und/oder eine Faser, ist.

**14.** Verfahren nach einem oder mehreren der vorangehenden Ansprüche, **dadurch gekennzeichnet, dass** die Katalysatorkonzentration, gewichtsbezogen auf das zu behandelnde Wasser, 0,005 bis 100 ppm, insbesondere 0,005 bis 10 ppm, vorzugsweise 0,005 bis 5 ppm, besonders bevorzugt 0,05 bis 2,5 ppm, ganz besonders bevorzugt 0,2 bis 1,0 ppm, beträgt und/oder dass im Falle von im zu behandelnden Wasser gelösten Katalysatoren die Katalysatorkonzentration, gewichtsbezogen auf das zu behandelnde Wasser, 0,005 bis 5 ppm, insbesondere 0,2 bis 1,0 ppm, beträgt und/oder dass im Falle von Trägerkatalysatoren die effektive Katalysatorkonzentration, gewichtsbezogen auf das zu behandelnde Wasser, 0,05 bis 10 ppm, insbesondere 0,05 bis 5 ppm, beträgt,

**15.** Verfahren nach Anspruch 1, **dadurch gekennzeichnet, dass** die Behandlung in einem Temperaturbereich von 10 bis 350 °C, insbesondere 10 bis 300 °C, vorzugsweise 30 bis 90 °C, erfolgt und/oder dass die Behandlung in einem Druckbereich von 1 bis 150 bar, insbesondere 1 bis 80 bar, erfolgt.

**16.** Verfahren nach Anspruch 1, **dadurch gekennzeichnet, dass** es sich bei dem Wasser enthaltenden System um ein Kessel(speise)wassersystem oder ein Kreislaufwassersystem, insbesondere in Kraftwerken oder industriellen

bzw. chemischen Produktionsanlagen, handelt.

**17.** Anwendung des Verfahrens nach einem oder mehreren der vorangehenden Ansprüche zur Verhinderung der Korrosion in Wasser enthaltenden Systemen, insbesondere in industriellen Anlagen und/oder Systemen, wie Kessel(speise)wassersystemen, Kreislaufwassersystemen und dergleichen.

**18.** Kombinationssystem zur Entfernung von Sauerstoff in Wasser enthaltenden Systemen, insbesondere in industriellen Anlagen und/oder Systemen, wie Kessel(speise)wassersystemen, Kreislaufwassersystemen und dergleichen, und/oder zur Verhinderung der Korrosion in Wasser enthaltenden Systemen, insbesondere in industriellen Anlagen und/oder Systemen, wie Kessel(speise)wassersystemen, Kreislaufwassersystemen und dergleichen, wobei das Kombinationssystem mindestens ein Sauerstoffbindemittel und mindestens einen Katalysator umfasst,
**dadurch gekennzeichnet,**
**dass** der Katalysator ein Übergangsmetallkomplex ist, welcher unter den Behandlungsbedingungen im Wesentlichen stabil ist und der Übergangsmetallkomplex der allgemeinen Formel ML mit M = Übergangsmetall und L= Ligand entspricht und die Komplexbildungskonstante $K_L$' gemäß der Gleichung:

$$K'_L = \frac{[ML]}{[M][L]}$$

bezogen auf die Komplexbildungsreaktion (1')

$$M + L \rightleftarrows M\,L \qquad (1')$$

bei 298,15 K mindestens $5 \cdot 10^1$ l/mol, insbesondere mindestens $5 \cdot 10^2$ l/mol, vorzugsweise mindestens $5 \cdot 10^5$ l/mol, ganz besonders bevorzugt mindestens $5 \cdot 10^8$ l/mol, beträgt und dass als Katalysator ein Übergangsmetallkomplex, welcher mindestens einen stickstoffhaltigen Liganden umfasst, eingesetzt wird und der Übergangsmetallkomplex ausgewählt ist aus den folgenden Verbindungen der allgemeinen Formeln (I) bis (IV)

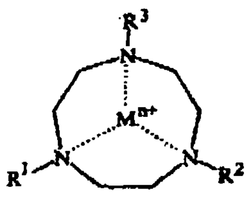
(I)

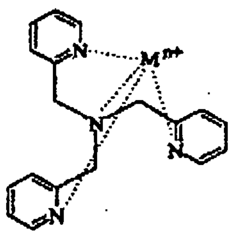
(II)

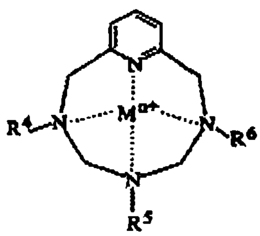
(III)

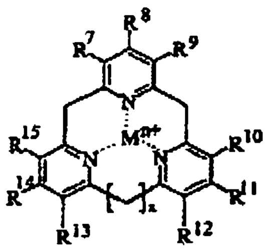
(IV)

wobei

- M ein Übergangsmetall, ist;
- n die Oxidationsstufe und/oder die Ladung des Übergangsmetalls darstellt und insbesondere ganze Werte von 0 bis 8, insbesondere von 0 bis 6, einnimmt, insbesondere wobei n im Fall, dass M Kupfer darstellt, vorzugsweise 2 beträgt;
- $R^1$ bis $R^{15}$, unabhängig voneinander, jeweils Wasserstoff oder einen Alkyl-, Aryl-, Alkylaryl- oder Arylalkylrest, insbesondere Wasserstoff oder einen geradkettigen oder verzweigten $C_1$- bis $C_{10}$-Alkylrest, darstellen und vorzugsweise sämtlich Wasserstoff sind;
- x ganze Werte von 1 bis 3 annimmt und vorzugsweise 1 ist und

die Sauerstoffbindemittel aus N,N-Diethylhydroxylamin (DEHA) oder N-Isopropylhydroxylamin (NIPHA) ausgewählt sind.

**Claims**

1. Process for the removal of oxygen in systems containing water, in particular in industrial plants and/or systems such as boiler (feed) water systems, cycle water systems and similar things by treating the water containing the oxygen with at least one oxygen bonder (oxygen bonder, oxygen scavenger or $O_2$ scavanger) in the presence of at least one catalyst
**characterised by the fact**
that as catalyst [there is] a transition metal complex that is essentially stable under the conditions of treatment and the transition metal complex equals the general formula ML with M = transition metal and L = ligand and the complex forming constant $K_L$' as per the equation:

$$K'_L = \frac{[ML]}{[M][L]}$$

with reference to the complex forming reaction (1')

$$-M + L \rightleftarrows M\,L \qquad (1')$$

- is at least $5 \cdot 10^1$ l/mol, in particular at least $5 \cdot 10^2$ l/mol, preferably at least $5 \cdot 10^5$ l/mol and very preferably at least $\cdot\ 10^8$ l/mol at 298.15 K and that the concentration of oxygen bonder with reference to the water treated, 1 to 1,000 ppm, in particular 10 to 120 ppm, preferably approximately 50 ppm or that the concentration of oxygen bonder (calculated as a weight ratio of oxygen bonder to be inserted to oxygen to be removed) is at least 4, in particular at least 6, preferably at least 8 or more and that as catalyst [there is] a transition metal complex that includes at least a ligand containing nitrogen that is used and the transition metal complex is selected from the following compounds of the general formulas (I) to (IV)

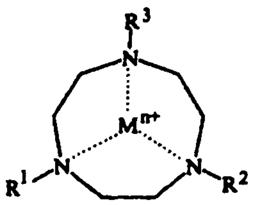
(I)
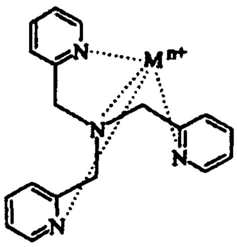
(II)
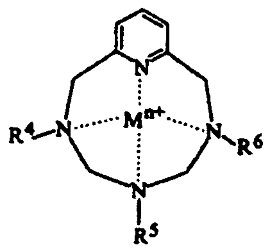
(III)
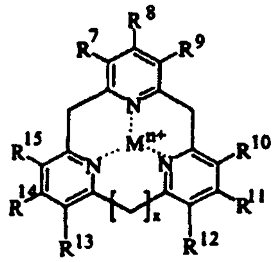
(IV)

where

- M is a transition metal,
- n represents the oxidation level and/or the load of the transition metal and in particular takes in the whole numbers from 0 to 8, in particular from 0 to 6, in particular where n is preferably 2 in the event that M represents coppers;
- $R^1$ to $R^{15}$, independent of one another, represent either hydrogen or an alkyl-, aryl-, alkylaryl- or arylalkyl residue, in particular hydrogen or straight-change or branched residue of $C_1$ to $C_{10}$ alkyl, and are preferably all hydrogen;

accepts x total values from 1 to 3 and is preferably 1 wherein the oxygen bonder is selected from N,N-Diethylhydroxylamin (DEHA) or N-Isopropylhydroxylamin (NIPHA).

2. process according to claim 1 **characterised by** the fact that N,N-Diethylhydroxylamin (DEHA) and is used preferred as oxygen bonder.

3. process according to claim 1 **characterised by** the fact that the transition metal selected from the group of titanium, vanadium, molybdenum, manganese, iron, cobalt, nickel, copper, ruthenium, rhodium, palladium, silver, osmium, iridium, platinum and gold, in particular copper, that manganese, especially preferred copper, very especially preferred copper that +2.

4. process according to claim 1 **characterised by** the fact that the transition metal complex is selected from the following compounds:

- compound of the general formula (I) with M = Mn or Cu, preferably Cu, and $R^1 = R^2 = R^3$ = H and n = 2;
- compound of the general formula (II) with M = Mn or Cu, preferably Cu, and n = 2;
- compound of the general formula (III) mit M = Cu and $R^4 = R^5 = R^6$ = H and n = 2;
- compound of the general formula (IV) with M = Cu and $R^7$ to that $R^{15}$ = H and n = 2 and x = 1.

5. process according to claim 1 **characterised by** the fact that the transition metal complex: corresponds to the general formula (III) with M = Cu and $R^4 = R^5 = R^6$ = H and n = 2.

6. process according to claim 1 **characterised by** the fact that the transition metal is at the oxidation stage +2, +3 or +4, in particular in the case of copper at the oxidation stage +2.

7. process according to claim 1 **characterised by** the fact that the transition metal complex is a Cu(II) complex, in particular where the Cu(II) ion is coordinated preferably many times, in particular four times, fun times or six times, very especially preferred coordinated four times, and or that the transition metal complex is a planar Cu(II) complex with a four-fold coordinated Cu(II) ion as the transition metal.

8. process according to claim 1 **characterised by** the fact that the concentration of the transition metal complex under the process conditions in the water to be treated with reference to the free transition metal ions, and with reference to the weight of the water to be treated, is no more than 0.01 ppm, in particular no more than 0.001 ppm, and very especially preferred no more than 0.0001 ppm.

9. process according to claim 4 **characterised by** the fact that the is dissolved in the water to be treated.

10. process according to claims 1 through 9 **characterised by** the fact that the transition metal complex is used as a carrier catalyst and/or that the transition metal complex is linked and/or bonded to a suitable carrier surface, in particular to a polymer organic or inorganic carrier system, preferably via chemical, in particular covalent and/or ionic bonds that via bond(s) of the ligand(s) containing nitrogen to the carrier surface.

11. process according to claim 10 **characterised by** the fact that the catalyst carrier has a polymer that contains at least one substitute and/or functional group for forming a covalent bond, in particular -H, -OH, $-NH_2$, -NH-R, -Halogen, -SH, -Si-OR, -C=C, -C=C, -OR, -NCO, -COOH, -COOR, -CHO, -CN, -NH-, -C=O, -O=C-O-C=O- and/or epoxide.

12. process according to claims 10 and 11 **characterised by** the fact that the polymer catalyst carrier is selected from the group of polyvinyl chlorides, the polybutadienenes, polychlorinated butadienenes, polyvinyl chlorides, poly acrylic nitriles, polydichlorinated methyloxaisobutanene, poly(meth)acrylates, polyurethanenes, polystyrenes, polyvinyl alcohols, polyethyleniminene, celluloses, chitosanene, polysiloxanene, polyamides, polyamines, polyformaldehydes, polyalkylenes such as polyethylene or polypropylene, polytetrafluoroethylene, polyisobutylene, poly dimethyl phenyl oxide, chlormethylised polystyrenes and/or polyisocyanates.

13. process according to claims 11 to 12 **characterised by** the fact that the carrier is a molding, preferably a powder, a particle, an agglomerate and/or a fibre.

14. process according to one or several of the prior claims **characterised by** the fact that the catalyst concentration is with reference to the weight of the water to be treated, 0.005 to 100 ppm, in particular 0.005 to 10 ppm, preferably 0.005 to 5 ppm, especially preferred 0.05 to 2.5 ppm, especially preferred 0.2 to 1.0 ppm and/or that in the case of the catalysts to be dissolved in the water to be treated, the catalyst concentration is 0.005 to 5 ppm, in particular 0.2 to 1. A 0 ppm with reference to the weight of the water to be treated, and/or that in the case of carrier catalysts the effective catalyst concentration is 0.05 to 10 ppm, in particular 0.05 to 5 ppm with reference to the weight of the water to be treated.

**15.** process according to claim 1 **characterised by** the fact that it is treated in a temperature range of from 10 to 350 °C, in particular 10 to 300 °C, preferably 30 to 90 °C and/or it is treated in a pressure range from 1 to 150 bar, in particular 1 to 80 bar.

**16.** process according to claim 1 **characterised by** the fact that the system containing water is a boiler(feed)water system or cycle water system, in particular in power stations or industrial or chemical production plants.

**17.** application of the process according to one or several of the prior claims for preventing corrosion in systems containing water, in particular in industrial plants and/or systems such as boiler(feed)water systems, cycle water systems and comparable things.

**18.** combination system for the removal of oxygen in systems containing water, in particular in industrial plants and/or systems such as boiler(feed)water systems, cycle water systems and comparable things, and/or for preventing corrosion in systems containing water, in particular in industrial plants and/or systems, such as boiler(feed)water systems, cycle water systems and comparable things, where the combination system includes at least one oxygen bonder and at least one catalyst,
**characterised by the fact**
that the catalyst is a transition metal complex that is essentially stable under the conditions of treatment and the transition metal complex corresponds to the general formula ML with M = transition metal and'L= ligand and the complex forming constant $K_L$' as per the equation:

$$K'_L = \frac{[ML]}{[M][L]}$$

with reference to the complex forming reaction (1') M + L $\rightleftarrows$ M L (1')
at 298.15 K is at least $5 \cdot 10^1$ l/mol, in particular at least $5 \cdot 10^2$ l/mol, preferably at least $5 \cdot 10^5$ l/mol, especially preferred at least $5 \cdot 10^8$ l/mol, and that uses a transition metal complex as catalyst that encompasses at least one ligand containing nitrogen and the transition metal complex is selected among the following compounds of the general formulas (I) to (IV)

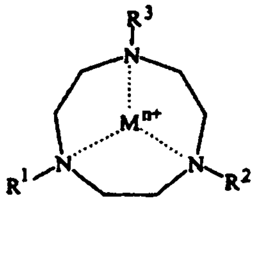
(I)

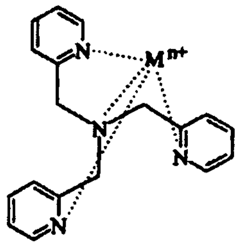
(II)

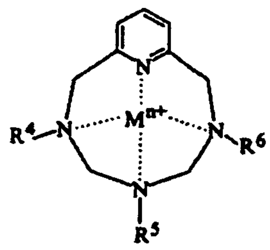
(III)

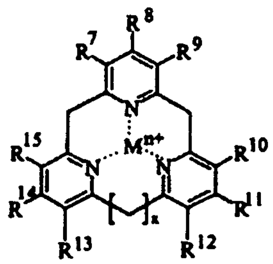
(IV)

where

- M is a transition metal;
- n represents the oxidation number and/or the charge of the transition metals and in particular takes whole numbers from 0 to 8, in particular from 0 to 6, in particular where n is preferably 2,in the event that M is copper;
- $R^1$ to $R^{15}$, independent of one another, represent hydrogen or a residual of alkyl, aryl, alkylaryl or arylalkyl, in particular hydrogen or a straight-change or branched $C_1$- to $C_{10}$ residual of alkyl and preferably are all hydrogen;
- x take whole numbers from 1 to 3 and is preferably 1 and the oxygen bonder of N,N-diethylhydroxylamine (DEHA) or N-isopropylhydroxylamine (NIPHA) are selected.

## Revendications

**1.** Procédé d'élimination de l'oxygène dans des systèmes contenant de l'eau, en particulier dans des installations et/ou des systèmes industriel(le)s comme des systèmes d'eau de chaudière / d'alimentation d'eau, des systèmes de circulation d'eau et autres, par traitement de l'eau contenant de l'oxygène au moyen d'au moins un liant d'oxygène (liant d'oxygène, piégeur d'oxygène, éliminateur d'oxygène) en présence d'au moins un catalyseur.
**caractérisé en ce que**
comme catalyseur un complexe de métal de transition qui est essentiellement stable dans les conditions de traitement, et le complexe de métal de transition correspond à la formule générale ML où M = métal de transition et L = ligand et la constante de complexation $K_L$' selon l'équation :

$$K'_L = \frac{[ML]}{[M][L]}$$

en fonction de la réaction de complexation (1')

$$-M + L \rightleftarrows M\,L \qquad (1')$$

- s'élève, sous 298,15 K, à au moins $5 \cdot 10^1$ l/mol, en particulier à au moins $5 \cdot 10^2$ l/mol, de préférence à au moins $5 \cdot 10^5$ l/mol, idéalement à au moins $5 \cdot 10^8$ l/mol, et **en ce que** la concentration en liant d'oxygène s'élève, en fonction de la masse d'eau à traiter, de 1 à 1 000 ppm, en particulier de 10 à 120 ppm, de préférence à environ 50 ppm, ou **en ce que** la concentration en liant d'oxygène, calculée en tant que rapport pondéral entre le liant d'oxygène à utiliser et l'oxygène à éliminer, s'élève à au moins 4, en particulier à au moins 6, de préférence à au moins 8 ou plus, et **en ce qu'**un complexe de métal de transition comprenant au moins un ligand azoté est utilisé comme catalyseur et le complexe de métal de transition est choisi parmi les composés des formules (I) à (IV) suivants

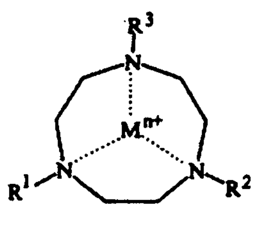
(I)

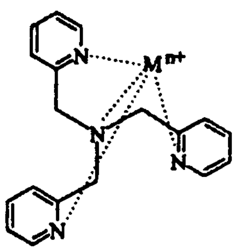
(II)

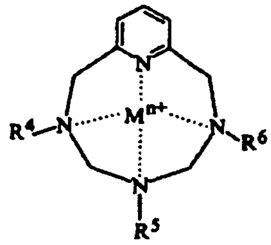
(III)

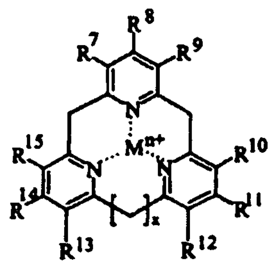
(IV)

où

- M est un métal de transition,
- n représente l'état d'oxydation et/ou la charge du métal de transition et s'exprime en particulier sous la forme de valeurs entières de 0 à 8, en particulier de 0 à 6, n s'élevant de préférence à 2, en particulier au cas où M représente du cuivre ;
- $R^1$ à $R^{15}$, indépendants les uns des autres, représentent respectivement de l'hydrogène ou un radical alkyle, aryle, alkylaryle ou arylalkyle, en particulier de l'hydrogène ou un radical alkyle $C_1$- à $C_{10}$ à chaîne droite ou ramifié, et sont de préférence exclusivement de l'hydrogène ;

x adopte des valeurs entières de 1 à 3 et est de préférence 1, le liant d'oxygène étant choisi entre du N,N-diéthylhydroxylamine (DEHA) et du N-isopropylhydroxylamine (NIPHA).

**2.** Procédé selon la revendication 1, **caractérisé en ce que** du N,N-diéthylhydroxylamine (DEHA) est utilisé de préférence comme liant d'oxygène.

3. Procédé selon la revendication 1, **caractérisé en ce que** le métal de transition est choisi parmi le groupe comprenant le titane, le vanadium, le molybdène, le manganèse, le fer, le cobalt, le nickel, le cuivre, le ruthénium, le rhodium, le palladium, l'argent, l'osmium, l'iridium, le platine et l'or, en particulier entre le cuivre, le fer et le manganèse, de préférence du cuivre, idéalement du cuivre à l'état d'oxydation +2.

4. Procédé selon la revendication 1, **caractérisé en ce que** le complexe de métal de transition est choisi parmi les composés suivants :

   - Composé de la formule générale (I) avec M = Mn ou Cu, de préférence Cu, et $R^1$ = $R^2$ = $R^3$ = H et n = 2 ;
   - Composé de la formule générale (II) avec M = Mn ou Cu, de préférence Cu, et n = 2 ;
   - Composé de la formule générale (III) avec M = Cu et $R^4$ = $R^5$ = $R^6$ = H et n=2;
   - Composé de la formule générale (IV) avec M = Cu et $R^7$ à $R^{15}$ = H et n = 2etx=1.

5. Procédé selon la revendication 1, **caractérisé en ce que** le complexe de métal de transition correspond à la formule générale (III) avec M = Cu et $R^4$ = $R^5$ = $R^6$ = H et n = 2.

6. Procédé selon la revendication 1, **caractérisé en ce que** le métal de transition se trouve à l'état d'oxydation +2, +3 ou +4, en particulier à l'état d'oxydation +2 en cas d'utilisation de cuivre.

7. Procédé selon la revendication 1, **caractérisé en ce que** le complexe de métal de transition est un complexe Cu (II), l'ion Cu(II) disposant de préférence de plusieurs liaisons, en particulier quatre, cinq ou six liaisons, disposant idéalement de quatre liaisons et/ou **en ce que** le complexe de métal de transition est un complexe planaire Cu(II) avec un ion Cu(II) à quatre liaisons comme métal de transition.

8. Procédé selon la revendication 1, **caractérisé en ce que** la concentration du complexe de métal de transition s'élève, sous les conditions du procédé dans l'eau à traiter en fonction des ions libres du métal de transition et en fonction de la masse d'eau à traiter, à 0,01 ppm maximum, en particulier à 0,001 ppm maximum, et idéalement à 0,0001 ppm maximum.

9. Procédé selon la revendication 4, **caractérisé en ce que** le complexe de métal de transition est dissous dans l'eau à traiter.

10. Procédé selon les revendication 1 à 9, **caractérisé en ce que** le complexe de métal de transition est employé comme catalyseur de support, et/ou **en ce que** le complexe de métal de transition est noué et/ou attaché à une surface de support appropriée, en particulier à un système de support polymère organique ou inorganique, de préférence via des liaisons chimiques, en particulier covalentes et/ou ioniques, en particulier via une/des liaison(s) du/des ligand(s) azoté(s) à la surface du support.

11. Procédé selon la revendication 10, **caractérisé en ce que** le support de catalyseur consiste en un polymère contenant au moins un substituant et/ou un groupe fonctionnel adéquat pour la formation d'une liaison covalente" en particulier -H, -OH, $-NH_2$, -NH-R, halogène, -SH, -Si-OR, -C=C, -C≡C, -OR, -NCO, -COOH, -COOR, -CHO, -CN, -NH-, -C=O, -O=C-O-C=O- et/ou époxyde.

12. Procédé selon les revendication 10 et 11, **caractérisé en ce que** le support de catalyseur polymère est choisi parmi le groupe constitué des polychlorures de vinyle, des polybutadiènes, des polychloro-butadiènes, des chlorures de polyvinylidène, des polyacrylonitriles, des polydichlorméthyloxaisobutanes, des poly(méth)acrylates, des polyuréthanes, des polystyrènes, des alcools de polyvinyle, des polyéthylénimines, des celluloses, des chitosanes, des polysiloxanes, des polyamides, des polyamines, polyformaldéhydes, des polyalkylènes comme le polyéthylène et le polypropylène, du polytétrafluoréthylène, du polyisobutylène, du polyphénylène oxyde, des polystyrènes chlorméthylés et/ou des polyisocyanates.

13. Procédé selon les revendications 11 et 12, **caractérisé en ce que** le support est un corps moulé, de préférence une poudre, une particule, un aggloméré et/ou une fibre.

14. Procédé selon l'une ou plusieurs des revendications précédentes, **caractérisé en ce que** la concentration du catalyseur s'élève, en fonction de la masse d'eau à traiter, de 0,005 à 100 ppm, en particulier de 0,005 à 10 ppm,

de préférence de 0,005 à 5 ppm, préférentiellement de 0,05 à 2,5 ppm, idéalement de 0,2 à 1,0 ppm, et/ou **en ce que**, dans le cas de catalyseurs dissous dans l'eau, la concentration du catalyseur s'élève, en fonction de la masse d'eau à traiter, de 0,005 à 5 ppm, en particulier de 0,2 à 1,0 ppm, et/ou en ce que, en cas de catalyseurs de support, la concentration effective du catalyseur s'élève, en fonction de la masse d'eau à traiter, de 0,05 à 10 ppm, en particulier de 0,05 à 5 ppm,

**15.** Procédé selon la revendication 1, **caractérisé en ce que** le traitement se produit dans une échelle de température située entre 10 et 350 °C, en particulier entre 10 et 300 °C, de préférence entre 30 et 90 °C, et/ou **en ce que** le traitement se produit dans une marge de pression située entre 1 et 150 bar, en particulier entre 1 et 80 bar.

**16.** Procédé selon la revendication 1, **caractérisé en ce qu'**il s'agit, concernant le système contenant de l'eau, d'un système d'eau de chaudière / d'alimentation d'eau ou d'un système de circulation d'eau, en particulier dans des centrales électriques ou des installations de production industrielles ou chimiques.

**17.** Utilisation du procédé selon l'une ou plusieurs des revendications précédentes afin d'empêcher la corrosion dans des systèmes contenant de l'eau, en particulier dans des installations et/ou des systèmes industriel(le)s comme des systèmes d'eau de chaudière / d'alimentation d'eau, des systèmes de circulation d'eau et autres.

**18.** Système combiné destiné à l'élimination de l'oxygène dans des systèmes contenant de l'eau, en particulier dans des installations et/ou systèmes industriel(le)s comme des systèmes d'eau de chaudière / d'alimentation d'eau, des systèmes de circulation d'eau et autres, et/ou à empêcher la corrosion dans des systèmes contenant de l'eau, en particulier dans des installations et/ou systèmes industriel(le)s comme des systèmes d'eau de chaudière / d'alimentation d'eau, des systèmes de circulation d'eau et autres, le système combiné comprenant au moins un liant d'oxygène et au moins un catalyseur,
**caractérisé en ce que**
le catalyseur est un complexe de métal de transition qui est essentiellement stable dans les conditions de traitement et le complexe de métal de transition correspond à la formule générale ML où M = métal de transition et L = ligand et la constante de complexation $K_L'$ selon l'équation :

$$K'_L = \frac{[ML]}{[M][L]}$$

en fonction de la réaction de complexation (1')

$$M + L \rightleftarrows M\,L \qquad (1')$$

s'élève, sous 298,15 K, à au moins $5 \cdot 10^1$ l/mol, en particulier à au moins $5 \cdot 10^2$ l/mol, de préférence à au moins $5 \cdot 10^5$ l/mol, idéalement à au moins $5 \cdot 10^8$ l/mol, et **en ce qu'**un complexe de métal de transition comprenant au moins un ligand azoté est utilisé comme catalyseur et le complexe de métal de transition est choisi parmi les composés des formules (I) à (IV) suivants

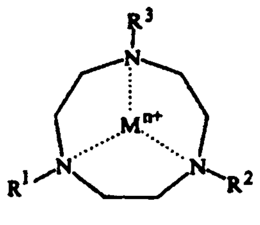
(I)

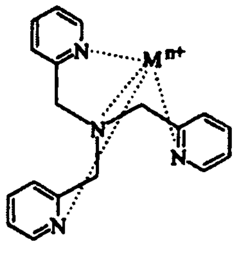
(II)

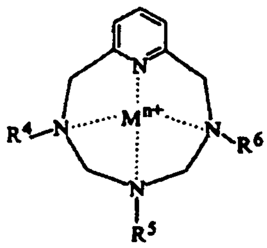
(III)

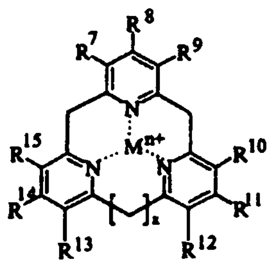
(IV)

où

- M est un métal de transition ;
- n représente l'état d'oxydation et/ou la charge du métal de transition et s'exprime en particulier sous la forme de valeurs entières de 0 à 8, en particulier de 0 à 6, n s'élevant de préférence à 2, en particulier au cas où M représente du cuivre ;
- $R^1$ à $R^{15}$, indépendants les uns des autres, représentent respectivement de l'hydrogène ou un radical alkyle, aryle, alkylaryle ou arylalkyle, en particulier de l'hydrogène ou un radical alkyle $C_1$- à $C_{10}$ à chaîne droite ou ramifié, et sont de préférence exclusivement de l'hydrogène ;
- x adopte des valeurs entières de 1 à 3 et est de préférence 1, le liant d'oxygène étant choisi entre du N,N-diéthylhydroxylamine (DEHA) et du N-Isopropylhydroxylamine (NIPHA).

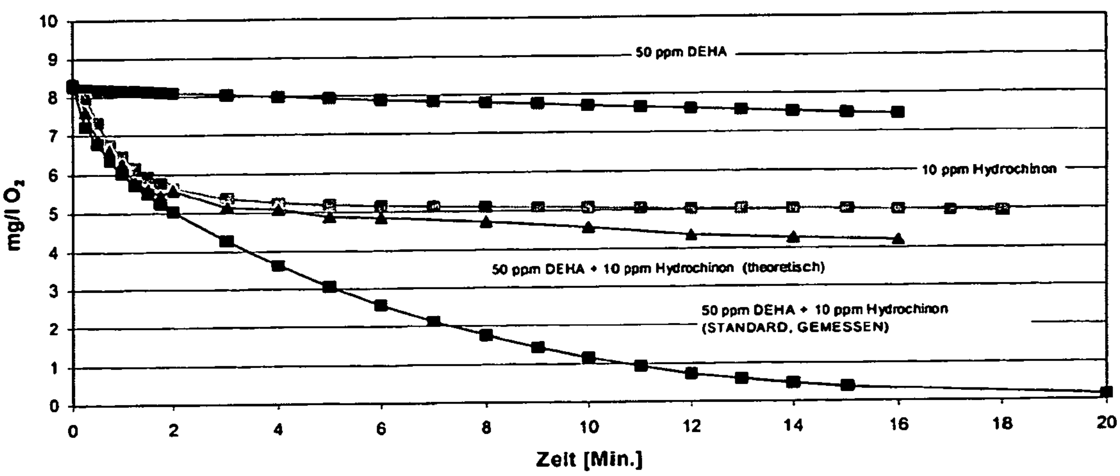
50 ppm DEHA
10 ppm Hydrochinon
50 ppm DEHA + 10 ppm Hydrochinon (theoretisch)
50 ppm DEHA + 10 ppm Hydrochinon
(STANDARD, GEMESSEN)
mg/l $O_2$
Zeit [Min.]
0
1
2
3
4
5
6
7
8
9
10
12
14
16
18
20

Fig. 1

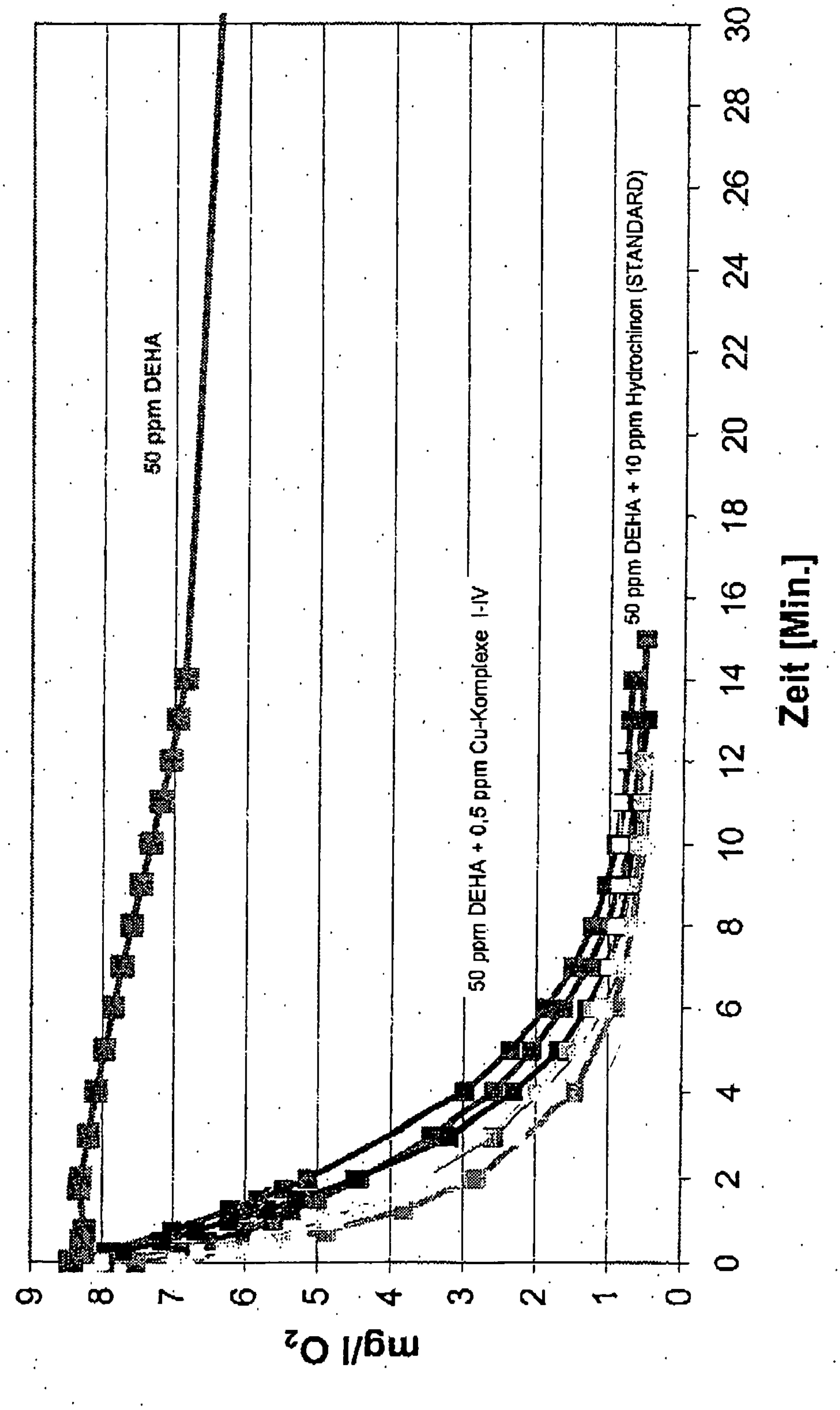
50 ppm DEHA
50 ppm DEHA + 0,5 ppm Cu-Komplexe I-IV
50 ppm DEHA + 10 ppm Hydrochinon (STANDARD)
mg/l O2
Zeit [Min.]

Fig.2

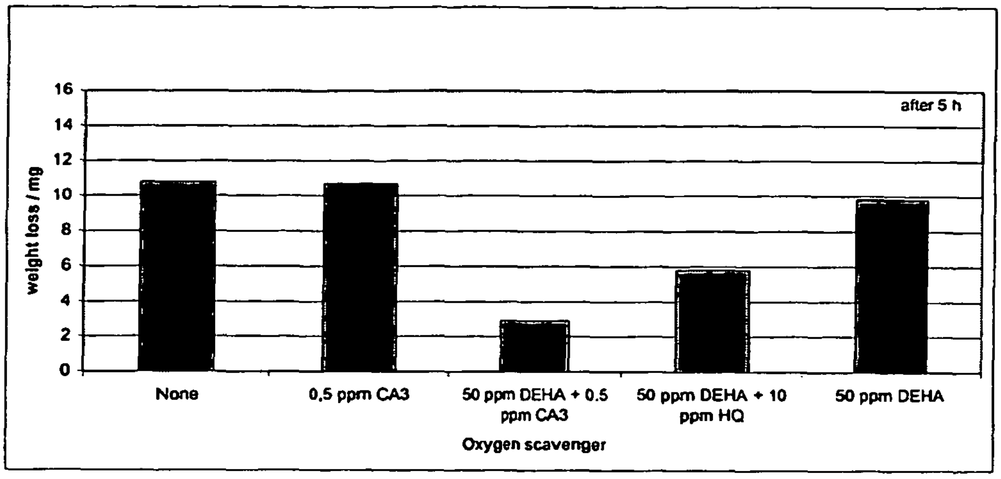
after 5 h
weight loss / mg
16
14
12
10
8
6
4
2
0
None
0,5 ppm CA3
50 ppm DEHA + 0.5 ppm CA3
50 ppm DEHA + 10 ppm HQ
50 ppm DEHA
Oxygen scavenger

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5256311 A
- EP 0505633 B1
- US 4067690 A
- DE 10163331 A1